# EUROPÄISCHE PATENTANMELDUNG

(11) **EP 4 151 061 A1**
(43) Veröffentlichungstag der Anmeldung: **22.03.2023**
(21) Anmeldenummer: 22180954.4
(22) Anmeldetag: 24.06.2022
(51) Int. Cl.: A01B 69/04, A01B 71/08, A01B 79/00

(54) **VERFAHREN ZUM BETRIEB EINER MASCHINENKOMBINATION SOWIE MASCHINENKOMBINATION**

(30) Priorität: 13.09.2021 DE 102021123584
(71) Anmelder: CLAAS E-Systems GmbH, 49201 Dissen (DE)
(72) Erfinder: Jürschik, Peter, 33335 Gütersloh (DE); Johann to Büren, Gerald, 49205 Hasbergen (DE); Hoeke, Oliver, 32257 Bünde (DE)
(74) Vertreter: CLAAS Gruppe

(57) **Zusammenfassung**

Die Erfindung betriff ein Verfahren zum Betrieb einer Maschinenkombination (1), die Maschinenkombination (1) umfassend eine Zugmaschine (2) und ein von der Zugmaschine (2) gezogenes Anbaugerät (3) zur Bearbeitung eines Bodens (6). Außerdem umfasst die Zugmaschine (2) mindestens eine Kamera (4), die auf das Anbaugerät (3) gerichtet ist. Weiterhin umfasst das Anbaugerät (3) mindestens ein Werkzeug (5), mittels dessen der Boden (6) bearbeitet wird. Hierbei erfasst die Kamera (4) mindestens ein Werkzeug (5) optisch.

Erfindungsgemäß ist vorgesehen, dass mittels der Kamera (4) erfasste Bilder derart ausgewertet werden, dass eine Blockade an dem Anbaugerät (3) erkennbar ist.

Die Erfindung betrifft weiterhin eine Maschinenkombination (1).

## Beschreibung

Die Erfindung betrifft ein Verfahren zum Betrieb einer Maschinenkombination gemäß dem Anspruch 1 sowie eine Maschinenkombination gemäß dem Anspruch 13.

Derartige Maschinenkombinationen werden beispielsweise in der Landwirtschaft eingesetzt, um ein Feld zu bestellen. Eine derartige Maschinenkombination umfasst eine Zugmaschine und ein von der Zugmaschine gezogenes Anbaugerät zur Bearbeitung eines Bodens. Bei der Zugmaschine kann es sich beispielsweise um einen Traktor handeln. Das Anbaugerät wird beispielsweise mittels einer Kupplungsvorrichtung mit dem Traktor verbunden, sodass dieses von dem Traktor gezogen wird. Mit anderen Worten wird das Anbaugerät an die Zugmaschine angehängt, sodass beide zusammen die Maschinenkombination ergeben. Beispielhafte Anbaugeräte sind ein Pflug, eine Bodenfräse oder ein Grubber.

Außerdem umfasst das Anbaugerät mindestens ein Werkzeug, mittels dessen der Boden bearbeitet wird. In diesem Zusammenhang gibt es Werkzeuge beziehungsweise Anbaugeräte verschiedenster Art, die auf eine jeweilige Aufgabe abgestimmt sind. Beispielsweise gibt es solche Anbaugerät, die ein Werkzeug zur Auflockerung und/oder zum Umpflügen des Bodens aufweisen.

Weiterhin umfasst die Zugmaschine mindestens eine Kamera, die auf das Anbaugerät gerichtet ist. Hierbei erfasst die Kamera mindestens ein Werkzeug optisch.

Während eines Betriebes der Maschinenkombination kann es immer wieder zu Störungen kommen, beispielsweise in Form von Verstopfungen oder Blockierungen. Gründe hierfür können beispielsweise auf dem Feld liegende Steine, Äste oder sonstige Gegenstände sein, die sich in dem Werkzeug des Anbaugeräts verhaken können und dieses somit blockieren. Außerdem können Ansammlungen von Erntegut, oder beispielsweise Verklumpen desselben infolge von Feuchtigkeit, Probleme hervorrufen.

Dies kann schwerwiegende Schäden an dem Anbaugerät selbst und/oder an der Zugmaschine verursachen, beispielsweise wenn das Anbaugerät blockiert, aber dennoch von der Zugmaschine betrieben und/oder gezogen wird.

Aus diesem Grund sind dem Stand der Technik Lösungen zu entnehmen, mittels derer das Anbaugerät überwacht werden kann, sodass beispielsweise ein Fahrer der Zugmaschine bei Auftreten eines Problems entsprechend eingreifen kann.

Der Patentanmeldung US 2015/0296701 A1 ist eine Vorrichtung als bekannt zu entnehmen, die einen an dem Anbaugerät angeordneten Sensor umfasst. Dieser Sensor erfasst einen Bereich des Werkzeugs, insbesondere dort, wo dieses mit dem Boden in Kontakt kommt beziehungsweise ist. Außerdem umfasst die Vorrichtung eine Elektronik, mittels welcher von dem Sensor erfasste Daten erfasst und derart ausgewertet werden können, dass feststellbar ist, ob beispielsweise eine Materialanhäufung im Bereich des Werkzeugs vorliegt.

Nachteilig bei dem Stand der Technik ist, dass für eine Vielzahl verschiedener Anbaugeräte der Sensor somit entweder umgebaut, das heißt zwischen den Anbaugeräten gewechselt werden muss, oder für jedes Anbaugerät ein eigener Sensor vorgesehen sein muss. Hinzu kommt, dass die vom Sensor erfassten Daten vom Fahrer in entsprechende Maßnahmen interpretiert werden müssen und somit einer subjektiven Beurteilung unterliegen, sodass Fehler, beispielsweise durch menschliches Versagen, auftreten können. Die Beurteilung ist außerdem abhängig von dem jeweiligen Anbaugerät, sodass der Fahrer eine Vielzahl verschiedener Anbaugeräte kennen muss, um die von Sensor erfassten Daten in Zusammenhang mit dem jeweiligen Werkzeug beziehungsweise Anbaugerät evaluieren zu können. Zusammengefasst ist der Betrieb somit sehr kompliziert und bedarf besonderer Aufmerksamkeit des Fahrers.

Es ist Aufgabe der vorliegenden Erfindung, die Nachteile des Stands der Technik zu beseitigen sowie ein Verfahren zum Betrieb einer Maschinenkombination bereitzustellen, mittels dessen der Betrieb besonders einfach und zuverlässig überwacht werden kann.

Diese Aufgabe wird durch ein Verfahren zum Betrieb einer Maschinenkombination gemäß dem Anspruch 1 sowie durch eine Maschinenkombination gemäß dem Anspruch 13 gelöst. Vorteilhafte Ausgestaltungen der Erfindung sind Gegenstand der Unteransprüche.

Erfindungsgemäß ist vorgesehen, dass mittels der Kamera erfasste Bilder derart ausgewertet werden, dass eine Blockade an dem Anbaugerät erkennbar ist.

In diesem Zusammenhang ist die Kamera insbesondere auf einen Bereich des Werkzeugs gerichtet, beziehungsweise dorthin, wo sich üblicherweise Blockaden bilden können. Die Bilder werden dann automatisch ausgewertet, sodass dies nicht durch den Fahrer bewerkstelligt werden muss. Hierdurch ergibt sich der Vorteil, dass die Bilder objektiv anhand vorher festgelegter Kriterien ausgewertet werden. Außerdem ergibt sich der Vorteil, dass an dem Anbaugerät selbst keine Sensorik vorhanden sein muss, um eine Blockade festzustellen. Stattdessen reicht die an der Zugmaschine angeordnete Kamera aus, die ggf. für verschiedene Anbaugeräte lediglich in ihrer optischen Ausrichtung und/oder einem Montageort an der Zugmaschine verändert werden muss.

Gemäß einer besonders vorteilhaften Ausgestaltung der Erfindung ist vorgesehen, dass zur Auswertung der erfassten Bilder selbige zu einer Auswerteinheit geleitet und mittels der Auswerteinheit ausgewertet werden. Die Auswerteinheit ist für die Auswertung der erfassten Bilder eingerichtet, wodurch Blockaden vorteilhafterweise besonders zuverlässig erkennbar sind.

Gemäß einer weiteren besonders vorteilhaften Ausgestaltung der Erfindung ist vorgesehen, dass zur Erkennung der Blockade mehrere zeitlich nacheinander erfasste Bilder jeweils in statische Bereiche und dynamische Bereiche unterteilt und jeweils mit mindestens einem Referenzbild verglichen werden. Dies ist so vorstellbar, dass statische Bereiche solche sind, in denen zumindest im Wesentlichen über eine Reihe einer Vielzahl nacheinander erfasster Bilder ("Bilderreihe") keine optische Veränderung stattfindet bzw. zu erwarten ist, das heißt in denen zumindest im Wesentlichen keine Veränderung über die Zeit auftreten bzw. zu erwarten sind. Beispielsweise handelt es sich bei einem statischen Bereich in Bezug auf das erfasste Bild um einen Bildbereich, der das Werkzeug beinhaltet, das sich zumindest nicht erwartbar stark verformt oder auf sonstige Weise relativ zu der Kamera in besonderem Maße bewegt, sodass das Werkzeug auf jedem Bild einer Bilderreihe zumindest im Wesentlichen gleich aussehen sollte. Mit anderen Worten zeigt während des regelmäßigen Betriebs ein Werkzeug zumindest im Wesentlichen keine Veränderung. Eine Pflugschar beispielsweise, der in den Boden eingreift, verändert während des regelmäßigen Betriebs ihre Position typischerweise nicht, sondern verweilt vielmehr weitestgehend in derselben Position relativ zu der Zugmaschine und mithin auch relativ zu der Kamera. Dies ist demzufolge im Bild ein solcher statischer Bereich.

Dementsprechend gibt es dynamische Bereiche, die während des regelmäßigen Betriebs über eine Bilderreihe hinweg eine Veränderung erwarten lassen. Bei dem obigen Beispiel eines Pflugs wird ein dynamischer Bereich eines Bildes insbesondere ein solcher sein, in dem der umgepflügte Boden sichtbar ist. Das Werkzeug in Form der Pflugschar wirft den Boden auf. Der Bildbereich, der den aufgeworfenen Boden beinhaltet (dynamischer Bereich), sieht erwartbar bei verschiedenen Bildern einer Bildreihe immer unterschiedlich aus, während die Pflugschar als solche (statischer Bereich) gemäß obiger Beschreibung erwartbar immer im Wesentlichen gleich aussieht.

Hierbei wird bei einer Abweichung mindestens eines der Bereiche von einem entsprechenden Bereich mindestens eines Referenzbilds, die bei einer über einen Prüfungszeitraum hinweg erfassten Serie von Bildern anhält, auf eine Blockade geschlossen. Das mindestens eine Referenzbild gibt eine Situation wieder, die einem regelmäßigen Betrieb der Maschinenkombination entspricht, das heißt insbesondere keine Blockade beinhaltet. Das Referenzbild kann bei einem jeweiligen Arbeitseinsatz der Maschinenkombination individuell erstellt werden oder bereits vorab erstellt und gespeichert worden sein.. Weicht nun während des Betriebs jeweils ein Bereich von dem Referenzbild ab, kann dadurch auf einen unregelmäßigen, das heißt gestörten, Betrieb geschlossen werden. Dieser Rückschluss kann insbesondere dann erfolgen, wenn die Abweichung über eine Bilderreihe hinweg anhält, das heißt nicht wieder verschwindet. Vorübergehende Abweichungen insbesondere in dem dynamischen Bereich eines Bildes können auftreten, ohne dass dies automatisch eine Blockade bedeuten muss. Bleibt die Abweichung jedoch über längere Zeit bestehen, deutet dies auf eine Blockade hin. Beispielsweise ist denkbar, dass ein wesentlicher Teil des statischen Bereichs einer Bilderreihe von dem statischen Bereich des mindestens einen Referenzbilds abweicht. Dies ist aus den oben genannten Gründen nicht zu erwarten. Die Ursache könnte sein, dass sich Boden oder sonstige Gegenstände an oder vor dem Werkzeug auftürmen und beispielsweise ein Teil des Werkzeugs optisch verdecken, der in dem statischen Bereich der Bilder liegt. Im Vergleich zu dem Referenzbild ist in einem solchen Fall Boden erkennbar, wo eigentlich das Werkzeug erwartet wird. Der Rückschluss auf eine Blockade ist daher angebracht..

Auch ist es denkbar, weitere Funktionsstörungen zu erkennen. Im Falle beispielsweise des Pfluges ist es vorstellbar, dass dieser nicht wie erwartet zumindest im Wesentlichen "ruhig" in die Erde eingreift und auf gleicher Höhe verweilt, sondern plötzlich Bewegungen nach oben und/oder unten und/oder nach rechts und/oder links ausführt. Bei solchen Abweichungen von mindestens einem Referenzbild kann darauf geschlossen werden, dass der Pflug nicht regelmäßig funktioniert. Hierdurch ergibt sich der Vorteil, dass Störungen besonders zuverlässig und einfach erkennbar sind.

Ein weiterer Vorteil ergibt sich dann, wenn die Blockade mit Mitteln der künstlichen Intelligenz erkannt wird, wobei vorzugsweise eine Auswerteinheit auf eine Datenbank zurückgreift, in der eine Vielzahl von Referenzbildern gespeichert ist. Hierbei kann die Auswerteinheit mittels Vergleichs mindestens eines erfassten Bilds, vorzugsweise einer Mehrzahl erfasster Bilder, mit den Referenzbildern auf die Blockade schließen. In diesem Zusammenhang wurde die künstliche Intelligenz insbesondere vor Inbetriebnahme trainiert, das heißt im Rahmen eines Trainings wurde eine Vielzahl von Vergleichen durchgeführt, die sodann auf Richtigkeit überprüft wurden. Die künstliche Intelligenz wird auch während des regulären Betriebs ständig verbessert, da ein Ergebnis des Vergleiches immer wieder, beispielsweise durch einen Benutzer, auf Richtigkeit überprüft wird. Somit erhält die künstliche Intelligenz eine Rückmeldung, ob der Vergleich richtig durchgeführt wurde, woraufhin ein Algorithmus entsprechend angepasst werden kann. Hierdurch ergibt sich der Vorteil, dass die Störungen besonders treffsicher erkannt werden.

Weiterhin ist die Erfindung dann besonders vorteilhaft, wenn bei Erkennen einer Blockade automatisch Schritte eingeleitet werden, die dazu geeignet sind, die Blockade aufzulösen und/oder eine Beschädigung an der Maschinenkombination zu vermeiden. Ein solcher Schritt kann zum Beispiel darin bestehen, dass die Zugmaschine rückwärtsgefahren wird, um das Anbaugerät zurückzubewegen und hierdurch idealerweise die Blockade zu lösen. Beispielsweise kann die Blockade beispielsweise dadurch verursacht worden sein, dass eine Pflugschar im Untergrund auf einen großen Stein gestoßen ist. Durch Rückwärtsfahren und ggf. leichtes Anheben kann der Pflug von dem Stein gelöst und anschließend wieder vorwärts gezogen werden. Weiterhin ist denkbar, dass das Anbaugerät von der Zugmaschine über eine Zapfwelle angetrieben wird, wie dies beispielsweise bei einer Kreiselegge der Fall ist. Verhakt sich zwischen den Werkzeugen der Kreiselegge ein Ast, sodass es zu einer Blockade kommt, wird die Zapfwelle abgeschaltet. Auf diese Weise kann verhindert werden, dass einerseits das Anbaugerät und andererseits zumindest der Antrieb der Zugmaschine Schaden nehmen. Durch die erfindungsgemäße Ausgestaltung ergibt sich somit der Vorteil, dass die Maschinenkombination besonders sicher und besonders störungsarm betreibbar ist.

Außerdem ist in einer weiteren besonders vorteilhaften Ausgestaltung vorgesehen, dass als automatischer Schritt die Maschinenkombination angehalten und eine Quittierung eines Maschinenführers angefordert wird. Hierdurch wird dem Maschinenführer signalisiert, dass eine Störung vorliegt und sein Eingreifen erforderlich ist. Mit anderen Worten wird verhindert, dass die Störung nicht behoben wird, bevor der Betrieb fortgesetzt wird. Auf diese Weise lassen sich vorteilhafter Beschädigungen besonders zuverlässig vermeiden.

Ein weiterer Vorteil ergibt sich dann, wenn als automatischer Schritt die Zugmaschine und/oder das Anbaugerät bewegt werden, sodass die Blockade aufgelöst wird. Hierbei wird vorzugsweise die Zugmaschine um eine Fahrstrecke zurückgefahren und/oder das Anbaugerät angehoben. In diesem Zusammenhang ist es beispielsweise auch denkbar, dass das Anbaugerät angehoben wird. Da auf dem Boden häufig Steine und/oder Äste oder sonstige Gegenstände liegen, kann das Anbaugerät dort angehoben werden, sodass diese Hindernisse überwunden werden können. Anschließend kann das Anbaugerät wieder abgesenkt werden. Die Vorteile dieser Ausgestaltung sind bereits hinreichend erläutert.

Eine weitere besonders vorteilhafte Ausgestaltung ist dadurch gekennzeichnet, dass ein Typ des Anbaugeräts erkannt wird. Sowohl die Auswertung als auch die dementsprechend einzuleitenden Schritte sind maßgeblich abhängig von dem Typ des Anbaugeräts. Beispielsweise können je nach Anbaugerät verschiedene Strecken für ein Rückwärtsfahren oder Höhen für ein Anheben des Anbaugeräts sinnvoll sein, um eine Blockade erwartbar zu lösen. Durch die erfindungsgemäße Ausgestaltung kann die Maschinenkombination somit besonders individuell und bedarfsgerecht betrieben werden.

In einer weiteren besonders vorteilhaften Ausgestaltung der Erfindung ist vorgesehen, dass der Typ des Anbaugeräts mit Mitteln der künstlichen Intelligenz erkannt wird. Hierbei greift vorzugsweise eine Auswerteinheit auf eine Datenbank zurück, in der eine Vielzahl von Referenzbildern zu Anbaugeräten gespeichert ist. Ein Bild des Anbaugeräts, das als Eingangsinformation für die Identifikation des Anbaugeräts eingeht, kann insbesondere mittels derselben Kamera aufgenommen werden, die auf das mindestens eine Werkzeug gerichtet ist. Vorteilhafterweise wird das Anbaugerät automatisch erkannt und muss nicht beispielsweise durch den Maschinenführer ausgewählt werden. Hierdurch ergibt sich der Vorteil, dass menschliches Versagen ausgeschlossen wird und die Maschinenkombination außerdem besonders komfortabel betreibbar ist.

Gemäß einer weiteren besonders vorteilhaften Ausgestaltung ist vorgesehen, dass der Typ des Anbaugeräts mittels Identifikationsmitteln des Anbaugeräts erkannt wird, wobei vorzugsweise mindestens ein Identifikationsmittel von einem Sendemittel gebildet ist, das Daten zur Identifikation des Typs des Anbaugeräts sendet, die mittels eines der Auswerteinheit zugeordneten Empfangsmittels empfangen und der Auswerteinheit zugeleitet werden. Bei dem Sendemittel kann es sich beispielsweise um einen RFID Chip handeln. Mit anderen Worten geht die Erfassung nicht von der Zugmaschine, sondern von dem Anbaugerät aus. In der Praxis gibt es eine Vielzahl verschiedener Anbaugeräte, die selbst bei gleichem Typ aufgrund eines unterschiedlichen Fabrikats unterschiedlich aussehen können. Aufgrund dessen hat sich gezeigt, dass ein Identifizieren des Anbaugerät mittels Bilderfassung mitunter fehlerhaft sein kann. Dies ist vermeidbar, wenn das Anbaugerät sich gewissermaßen selbst identifiziert und der Zugmaschine ihren Typ mitteilt. Hierdurch ergibt sich der Vorteil, dass das Anbaugerät besonders zuverlässig erkennbar ist.

Ein weiterer Vorteil ergibt sich dann, wenn die Auswertung der erfassten Bilder zur Erkennung einer Blockade an dem Anbaugerät in Abhängigkeit des erkannten Typs des Anbaugeräts vorgenommen wird. Die Vorteile sind bereits hinreichend beschrieben.

Besonders vorteilhaft ist die Erfindung dann, wenn die automatischen Schritte in Abhängigkeit von dem erkannten Typ des Anbaugeräts vorgenommen werden. Die Vorteile sind bereits hinreichend beschrieben.

Ein weiterer Aspekt der Erfindung betrifft eine Maschinenkombination.

Vorteile des Verfahrens sind Vorteile der Maschinenkombination und umgekehrt. Aspekte sowie Ausführungen der Erfindungen können gleichermaßen übertragen werden und sind sowohl für das Verfahren als auch die Maschinenkombination gültig.

Es ist außerdem in einer besonders vorteilhaften Ausgestaltung denkbar, dass die Zugmaschine autonom fährt beziehungsweise ferngesteuert bedienbar ist. Das bedeutet, dass die Zugmaschine insbesondere unter Zuhilfenahme künstlicher Intelligenz autonom, also selbstständig, navigiert und beispielsweise die Anbaugeräte bedient. Ferner ist denkbar, dass die Zugmaschine zumindest teilweise autonom beziehungsweise ferngesteuert betreibbar ist, derart, dass ein Bediener Steuerbefehle an die Zugmaschine übermitteln kann. Hierzu weist die Maschinenkombination eine Steuereinrichtung auf, die mittels eines Endgerätes, beispielsweise einem Smartphone und/oder einem Tablet, bedienbar ist. Hierbei ist der Bediener in der Lage, die Maschinenkombination zu überwachen und/oder Steuerbefehle an diese zu übermitteln. Der Bediener kann also durch das Endgerät Steuerbefehle, insbesondere leitungslos, an die Maschinenkombination übermitteln, sodass er diese aus der Ferne bedienen kann, mithin ohne als Fahrer auf/in beziehungsweise in unmittelbarer Nähe derselben anwesend zu sein. Hierdurch ergibt sich der Vorteil, dass die Maschinenkombination besonders komfortabel und bequem und außerdem besonders ortsunabhängig betrieben werden kann.

Die Erfindung ist nachstehend anhand eines Ausführungsbeispiels, das in den Figuren dargestellt ist, näher erläutert. Es zeigt:
- Fig. 1:: eine schematische Gesamtansicht einer erfindungsgemäßen Maschinenkombination; und
- Fig. 2:: eine schematische Frontansicht eines Anbaugeräts der erfindungsgemäßen Maschinenkombination.

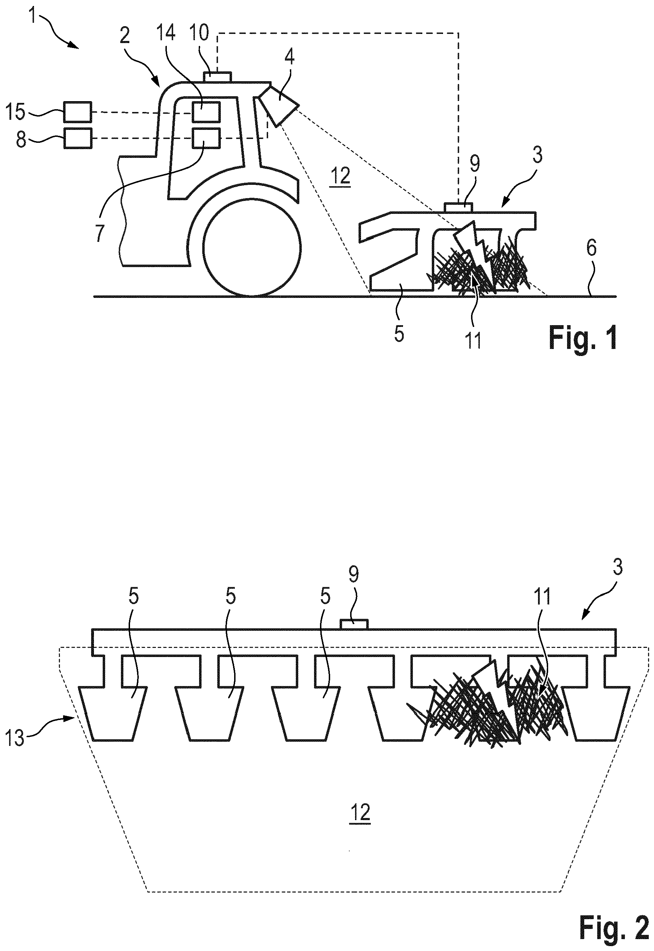

**Figur 1** zeigt in einer schematischen Gesamtansicht eine erfindungsgemäße Maschinenkombination **1.** Die Maschinenkombination **1** umfasst eine Zugmaschine **2,** die vorliegend ein Traktor ist, und ein von der Zugmaschine **2** gezogenes Anbaugerät **3** zur Bearbeitung eines Bodens **6.** Bei dem Anbaugerät **3** handelt es sich vorliegend um einen Grubber. Außerdem umfasst die Zugmaschine **2** vorliegend eine Kamera **4,** die an einem Dach einer Fahrerkabine der Zugmaschine **2** angeordnet und auf das Anbaugerät **3** gerichtet ist. Das Anbaugerät **3** umfasst vorliegend mehrere Werkzeuge **5,** mittels derer der Boden **6** bearbeitet wird. Hierbei ist die Kamera **4** derart ausgerichtet, dass mindestens eines der Werkzeuge **5** optisch erfasst wird. Vorzugsweise ist ein Blickfeld **12** der Kamera **4** so eingestellt, dass vorliegend zumindest im Wesentlichen alle Werkzeuge **5** einer Werkzeugreihe **13** darin liegen und somit optisch erfasst werden.

Wie in Zusammenschau der **Figuren 1 und 2** erkennbar ist, hat sich an den Werkzeugen **5** eine Blockade **11** gebildet. Hierbei handelt es sich vorliegend beispielsweise um eine Ansammlung von Ästen, die auf dem Boden **6** lagen und von den Werkzeugen **5** erfasst wurden. In diesem Zusammenhang kann es vorkommen, dass zu viele und/oder zu große Äste und/oder sonstige herumliegende Gegenstände, beispielsweise Steine, das Werkzeug **5** blockieren. Die Blockade **11** bewirkt, dass das Anbaugerät **3** seine bestimmungsgemäße Aufgabe, vorliegend beispielsweise ein Auflockern des Bodens **6,** nicht oder nur noch unzureichend erfüllen kann. Dies kann außerdem Schäden an der Zugmaschine **2** hervorrufen, beispielsweise dadurch, dass mehr Drehmoment als üblich zum Betrieb benötigt wird, da das Anbaugerät **3** aufgrund der Blockade **11** einen erhöhten Widerstand im Boden **6** hervorruft. Hierdurch kann ein Antrieb und/oder Getriebe der Zugmaschine **2** überlastet werden beziehungsweise Schaden nehmen.

Mittels der erfindungsgemäßen Maschinenkombination **1** ist es möglich, dass mittels der Kamera **4** erfasste Bilder derart ausgewertet werden, dass eine Blockade **11** an dem Anbaugerät **3** erkennbar ist.

Zunächst umfasst die Maschinenkombination **1** in dem gezeigten Beispiel ein Identifikationsmittel **9,** das an dem Anbaugerät **3** angeordnet ist. Mittels dieses Identifikationsmittels **9** kann ermittelt werden, um welche Art von Anbaugerät **3** es sich handelt. Dies ist von Vorteil, da sich Blockaden **11** je nach Art des Anbaugeräts **3** unterschiedlich äußern. In diesem Zusammenhang ist es beispielsweise vorstellbar, dass ein Materialanhäufung bei einem Grubber eine Blockade **11** darstellt, bei einem Pflug eine solche Materialanhäufung jedoch regelmäßig sein kann und sich eine Blockade anders darstellen würde. Die Blockade **11** wird daher in Abhängigkeit von dem Anbaugerät **3** beurteilt und als solche klassifiziert.

Das Identifikationsmittel **9** ist dafür mit einem Empfangsmittel **10,** das der Zugmaschine **2** zugeordnet ist, datenübertragend, insbesondere leitungslos, verbunden. Das Identifikationsmittel **9** ist hier als RFID Chip ausgebildet. Weiterhin steht das Empfangsmittel **10** datenübertragend, insbesondere leitungslos, mit einer Auswerteinheit 7 in Verbindung. Auf diese Weise kann das Identifikationsmittel **9** der Auswerteinheit **7** mitteilen, um welche Art von Anbaugerät **3** es sich vorliegend handelt.

Mittels der Auswerteinheit **7** werden die von der Kamera **4** erfassten Bilder ausgewertet. Hierbei greift die Auswerteinheit **7** auf eine Datenbank **8** zurück, in der Referenzbilder entsprechender Werkzeuge **5** bei Vorliegen beziehungsweise Nichtvorliegen einer Blockade **11** hinterlegt sind. Mit anderen Worten vergleicht die Auswerteinheit **7** mittels der Kamera **4** erfasste Bilder mit den Referenzbildern und ermittelt in Abhängigkeit von dem identifizierten Anbaugerät **3** durch diesen Vergleich, ob eine Blockade **11** vorliegt oder nicht.

In diesem Zusammenhang wird das von der Kamera **4** erfasste Blickfeld **12** in statische und dynamische Bereiche unterteilt. Dies ist derart vorstellbar, dass gewisse Bereiche des Blickfeldes **11** bei regelmäßigem Betrieb zumindest im Wesentlichen keine Änderungen zeigen, das heißt konstant beziehungsweise statisch sind. Ein solcher statischer Bereich ist vorliegend beispielsweise ein Teil eines jeweiligen Werkzeugs **5,** der in einiger Höhe oberhalb des Bodens **6** geführt wird. Ein solcher Teil des Werkzeugs **5** bewegt sich während des regelmäßigen Betriebs zumindest im Wesentlichen nicht, sondern liegt weitestgehend ruhig relativ zu dem Boden **6** . Demgegenüber ist beispielsweise ein von den Werkzeugen **5** erfasster Teil des Bodens ein dynamischer Bereich, da der Boden **6** bei regelmäßigem Betrieb ständig aufgelockert und somit in lockeres Erdreich, das gewissermaßen um die Werkzeuge **5** strömt, verwandelt wird. Diese statischen und dynamischen Bereiche wurden vor Inbetriebnahme in der Praxis ermittelt und sind in der Datenbank **8** in Form mindestens eines Referenzbilds abgespeichert.

Hierbei werden die mittels der Kamera **4** erfassten Bilder im zeitlichen Verlauf mit den Referenzbildern verglichen. Wenn beispielsweise ein sonst statischer Bereich plötzlich dynamisch wird, das heißt nicht erwartbare Bewegung zeigt, lässt dies auf einen unregelmäßigen, mithin gestörten, Betrieb des Anbaugeräts **3** schließen. Dies kann insbesondere der Fall sein, wenn Erdreich unerwartet einen Teil eines Werkzeugs **5** optisch verdeckt, der in dem statischen Bereich liegt und entsprechend eine solche Verdeckung nicht erwartet wird. Die Verdeckung spricht für eine "Auftürmung" von Erdreich an dem jeweiligen Werkzeug **5,** die auf eine Blockade **11** schließen lässt. Auch kann sich in der Praxis eine sonstige Störung des Betriebs des Anbaugeräts **3** ergeben, dies beispielsweise dadurch, dass das Anbaugerät **3** nicht regelmäßig weitestgehend ruhig durch den Boden **6** gleitet, sondern beispielsweise auf und ab und/oder seitwärts "springt". Gleichermaßen kann es für einen regelmäßig dynamischen Bereich gelten, dass dieser auf eine Blockade **11** schließen lässt, wenn er plötzlich statisch wird. Im Zusammenhang mit einem Grubber kann dies beispielsweise bedeuten, dass der Boden **6** nicht zu Erdreich aufgebrochen wird und somit kein lockeres Erdreich um die Werkzeuge **5** strömt. Mit anderen Worten zeigt der Pflug im Bereich seiner Werkzeuge **5** keinen regelmäßigen Betrieb, sodass die als Vorliegen der Blockade **11** interpretiert wird.

Dies kann sodann beispielsweise dem Maschinenführer mitgeteilt werden, sodass dieser entsprechende Maßnahmen einleiten kann. In dem gezeigten Beispiel ist die Auswerteinheit **7** dazu geeignet, bei der Identifikation einer Blockade **11** automatisch Schritte einzuleiten, die der erkannten Blockade **11** Rechnung tragen. Dies können Schritte zur Vermeidung von Schäden an der Maschinenkombination **1** und/oder Schritte zur Auflösung der Blockade **11** sein. Zur Einleitung entsprechender Schritte ist es besonders vorteilhaft, wenn der Auswerteinheit **7** Informationen über den Typ des Anbaugeräts **3** zur Verfügung stehen.

Vorliegend ist außerdem vorgesehen, dass die Maschinenkombination **1** zumindest teilweise autonom betreibbar ist. Hierfür weist die Maschinekombination **1** eine Steuereinrichtung **14** auf, mittels der die Maschinenkombination **1** steuerbar ist. Die Steuereinrichtung **14** kann vorliegend mittels eines mobilen Endgerätes **15,** das beispielsweise ein Smartphone oder Tablet sein kann, gesteuert werden. Auf diese Weise kann ein Bediener aus der Ferne die Maschinenkombination **1** zumindest überwachen beziehungsweise steuern.

**Bezugszeichenliste**

| |
|---|
| Maschinenkombination |
| Zugmaschine |
| Anbaugerät |
| Kamera |
| Werkzeug |
| Boden |
| Auswerteinheit |
| Datenbank |
| Identifikationsmittel |
| Empfangsmittel |
| Blockade |
| Blickfeld |
| Werkzeugreihe |
| Steuereinrichtung |
| Endgerät |

## Patentansprüche

1. Verfahren zum Betrieb einer Maschinenkombination (1), die Maschinenkombination (1) umfassend
- eine Zugmaschine (2) und
- ein von der Zugmaschine (2) gezogenes Anbaugerät (3) zur Bearbeitung eines Bodens (6),
die Zugmaschine (2) umfassend mindestens eine Kamera (4), die auf das Anbaugerät (3) gerichtet ist,
das Anbaugerät (3) umfassend mindestens ein Werkzeug (5), mittels dessen der Boden (6) bearbeitet wird,
wobei die Kamera (4) mindestens ein Werkzeug (5) optisch erfasst,
**dadurch gekennzeichnet, dass**
mittels der Kamera (4) erfasste Bilder derart ausgewertet werden, dass eine Blockade an dem Anbaugerät (3) erkennbar ist.

2. Verfahren nach Anspruch 1, **dadurch gekennzeichnet, dass** zur Auswertung der erfassten Bilder selbige zu einer Auswerteinheit (7) geleitet und mittels der Auswerteinheit (7) ausgewertet werden.

3. Verfahren nach Anspruch 1 oder 2, **dadurch gekennzeichnet, dass** zur Erkennung der Blockade mehrere zeitlich nacheinander erfasste Bilder jeweils in statische Bereiche und dynamische Bereiche unterteilt und jeweils mit mindestens einem Referenzbild verglichen werden, wobei bei einer Abweichung mindestens eines der Bereiche von einem entsprechenden Bereich des Referenzbilds, die bei einer über einen Prüfungszeitraum hinweg erfassten Serie von Bildern anhält, auf eine Blockade geschlossen wird.

4. Verfahren nach einem der vorhergehenden Ansprüche, **dadurch gekennzeichnet, dass** die Blockade mit Mitteln der künstlichen Intelligenz erkannt wird, wobei vorzugsweise eine Auswerteinheit (7) auf eine Datenbank (8) zurückgreift, in der eine Vielzahl von Referenzbildern gespeichert ist, wobei die Auswerteinheit (7) mittels Vergleichs mindestens eines erfassten Bilds, vorzugsweise einer Mehrzahl erfasster Bilder, mit den Referenzbildern auf die Blockade schließen kann.

5. Verfahren nach einem der vorhergehenden Ansprüche, **dadurch gekennzeichnet, dass** bei Erkennen einer Blockade automatisch Schritte eingeleitet werden, die dazu geeignet sind, die Blockade aufzulösen und/oder eine Beschädigung an der Maschinenkombination (1) zu vermeiden.

6. Verfahren nach Anspruch 4, **dadurch gekennzeichnet, dass** als automatischer Schritt die Maschinenkombination (1) angehalten und eine Quittierung eines Maschinenführers angefordert wird.

7. Verfahren nach Anspruch 5 oder 6, **dadurch gekennzeichnet, dass** als automatischer Schritt die Zugmaschine (2) und/oder das Anbaugerät (3) bewegt werden, sodass die Blockade aufgelöst wird, wobei vorzugsweise die Zugmaschine (2) um eine Fahrstrecke zurückgefahren und/oder das Anbaugerät (3) angehoben wird.

8. Verfahren nach einem der vorhergehenden Ansprüche, **dadurch gekennzeichnet, dass** ein Typ des Anbaugeräts (3) erkannt wird.

9. Verfahren nach Anspruch 8, **dadurch gekennzeichnet, dass** der Typ des Anbaugeräts (3) mit Mitteln der künstlichen Intelligenz erkannt wird, wobei vorzugsweise eine Auswerteinheit (7) auf eine Datenbank (8) zurückgreift, in der eine Vielzahl von Referenzbildern zu Anbaugeräten (3) gespeichert ist.

10. Verfahren nach Anspruch 8 oder 9, **dadurch gekennzeichnet, dass** der Typ des Anbaugeräts (3) mittels Identifikationsmitteln (9) des Anbaugeräts (3) erkannt wird, wobei vorzugsweise mindestens ein Identifikationsmittel (9) von einem Sendemittel gebildet ist, das Daten zur Identifikation des Typs des Anbaugeräts (3) sendet, die mittels eines der Auswerteinheit (7) zugeordneten Empfangsmittels (10) empfangen und der Auswerteinheit (7) zugeleitet werden.

11. Verfahren nach einem der Ansprüche 8 bis 10, **dadurch gekennzeichnet, dass** die Auswertung der erfassten Bilder zur Erkennung einer Blockade an dem Anbaugerät (3) in Abhängigkeit des erkannten Typs des Anbaugeräts (3) vorgenommen wird.

12. Verfahren nach einem der Ansprüche 5 bis 7 in Kombination mit einem der Ansprüche 8 bis 11, **dadurch gekennzeichnet, dass** die automatischen Schritte in Abhängigkeit von dem erkannten Typ des Anbaugeräts (3) vorgenommen werden.

13. Maschinenkombination (1), umfassend eine Zugmaschine (2) und ein Anbaugerät (3) zur Bearbeitung eines Bodens (6), wobei das Anbaugerät (3) ziehbar an der Zugmaschine (2) angeordnet ist,
die Zugmaschine (2) umfassend mindestens eine Kamera (4), die auf das Anbaugerät (3) gerichtet ist,
das Anbaugerät (3) umfassend mindestens ein Werkzeug (5), mittels dessen der Boden (6) bearbeitbar ist,
**gekennzeichnet durch**
eine Auswerteinheit (7), die in Daten übertragender Weise mit der Kamera (4) verbunden ist, sodass von der Kamera (4) erfasste Bilder zu der Auswerteinheit (7) leitbar und mittels der Auswerteinheit (7) auswertbar sind,
wobei die Auswerteinheit (7) dazu eingerichtet ist, anhand erfasster Bilder eine Blockade an dem Anbaugerät (3) zu erkennen.

14. Maschinenkombination (1) nach Anspruch 13, **dadurch gekennzeichnet, dass** die Zugmaschine (2) autonom oder ferngesteuert betreibbar ist und hierzu eine Steuereinrichtung (14) aufweist, mittels der die Maschinenkombination (1), insbesondere leitungslos, mittels eines Endgerätes (15), fernsteuerbar ist.
